# EUROPEAN PATENT APPLICATION

(11) **EP 4 082 741 A1**
(43) Date of publication of application: **02.11.2022**
(21) Application number: 20819252.6
(22) Date of filing: 03.08.2020
(51) Int. Cl.: B29C 43/02, B29C 43/20, B29C 43/52, B29C 70/46, B29C 70/54

(54) **METHOD FOR MANUFACTURING THERMOPLASTIC FIBER-REINFORCED RESIN MOLDED ARTICLE**

(30) Priority: 24.12.2019 JP 2019233508
(71) Applicant: The Mot Company, Ltd., Setagaya-ku, Tokyo 158-0087 (JP)
(72) Inventor: SAITO, Tomoaki, Tokyo 146-0083 (JP); SHUTO, Yasushi, Miura-gun, Kanagawa 240-0113 (JP)
(74) Representative: Kordel, Mattias
(86) International application number: PCT/JP2020/029634
(87) International publication number: WO 2020/246622

(57) **Abstract**

The present invention provides a method with which it is possible to obtain a fiber-reinforced resin molded article having high dimensional accuracy by press-molding a thermoplastic fiber-reinforced resin. A method for manufacturing a thermoplastic fiber-reinforced resin molded article having a thickness of 0.2-5.0 mm by pressing one thermoplastic fiber-reinforced resin prepreg 3, a plurality of laminated prepregs, or a plurality of prepregs that is obtained by placing and laminating an adhesive or an adhesive resin sheet between the prepregs, said method comprising: a step in which the temperatures of an upper die 1 and a lower die 4 are set to 170-270 °C; a step in which the prepreg is placed between the upper die and the lower die; a step in which a load is applied to the prepreg so as to deform the prepreg; a step in which the temperatures of the upper die and the lower die are lowered at a speed of 5 to 50°C per minute; and a step in which, after the upper die and the lower die are sufficiently cooled, the upper die is raised and a thermoplastic fiber-reinforced resin molded article is extracted.

## Description

### Technical Field

The present invention relates to a method for producing a fiber-reinforced thermoplastic resin molded article by pressing prepregs.

### Background Art

From the viewpoint of the environmental problems, the efforts to improve the fuel consumption are made in automobile industry, aviation industry and the like. To reduce the weight of the vehicle body and the airframe, substituting the fiber-reinforced resin for the metal is hoped, and the fiber-reinforced resin attracts increasingly attention.

The resin used for the fiber-reinforced resin is a thermoplastic resin or a thermosetting resin. The fiber-reinforced resin is a resin reinforced by using a fiber. The fiber-reinforced resin can be molded and shaped by heating, has high productivity, is easy to apply secondary process such as welding, has electric insulation, does not corrode, and has excellent recyclability. Due to such characteristics, the fiber-reinforced resin is widely used in various fields.

Because the carbon fiber-reinforced resin having a carbon fiber as a fiber is lightweight and has high strength and high rigidity, it has been studied and used already in wide fields such as shipping industry, space field, wind power generation, sporting goods and the like as well as automobile industry and aviation industry aforementioned the above.

An example of the fiber-reinforced resin molded article is an article obtained by pressing, heating and curing the semicured prepregs obtained by impregnating reinforcing fibrous materials such as glass cloth and carbon fiber with a thermosetting resin such as epoxy, phenol, polyester mixed with the additives such as the curing agent and the adhesive and heating or drying.

Examples of the processing of the fiber-reinforced resin include the autoclave molding, the oven molding, the press molding, the RTM/VaRTM method, the pultrusion molding, the filament winding, and the sheet winding. From the viewpoints that the productivity is high and that the fiber-reinforced resin molded article having good quality is obtained, the press molding is preferable.

However, the fiber-reinforced resin has lower extensibility than metal. When the fiber-reinforced resin is molded by pressing at the same speed as the speed for the metal, the fiber-reinforced resin may break and wrinkle. In addition, there are following problems. When the heat is applied to the prepregs too much, the resin viscosity is lowered too much, and the resin is melted. As a result, no accurate molded article can be formed. But when the heat is not applied, the viscosity is not low and so the molding failure occurs.

As a method for adjusting the fluidity of the resin composition of the prepreg, Patent Document 1 discloses a resin composition for the prepreg of a mixed epoxy resin containing a solid epoxy resin of 50 to 90 parts of weight and a liquid epoxy resin of 10 to 50 parts of weight, rubber, and curing agent, wherein the rubber is blended at the amount of 5 to 60 parts of weight to the mixed epoxy resin of 100 parts of weight, and the curing agent is blended at the amount of 1 to 100 parts of weight to the mixed epoxy resin of 100 parts of weight (Patent Document 1: JP 2005-213352 A).

Patent Document 2 discloses a prepreg composed of the reinforcing fiber and the epoxy resin composition suitable for press molding, especially high-cycle press molding; the prepreg obtained by using the epoxy resin composition which has excellent storage stability at a room temperature, can be cured by heating at relatively low temperature in a short time, and also discloses the cured resin has high heat resistance to suppress the excessive flowage of the resin, when heated and pressed for curing (Patent Document 2: JP 5,682,837 B).

### Citation List

### Patent Document

Patent Document 1: JP 2005-213352 A
Patent Document 2: JP 5,682,837 B

### Summary of Invention

### Technical Problem

The prepregs disclosed in Patent Document 1 and Patent Document 2 are prepared by specifying the component ratios of the resin composition of the prepregs to adjust the fluidity of the resin. Only when the resin compositions of the disclosed component ratios are used for the prepreg, the effects are exhibited. Namely, as for the prepregs obtained by using a resin composition except for the resin composition having component ratio described above (for example, the prepregs of the general resin compositions), the problems cannot be solved. In view of the use, the form, the size, the required cost and the like of the fiber-reinforced resin molded article used in the various fields recently, the above specific resin composition such as the resin compositions described above cannot be necessarily used, and it is difficult to apply those prepregs to all the press moldings for increased demands.

Furthermore, both Patent Documents 1 and 2 relate to the prepreg of the thermosetting resin and do not refer to the thermoplastic resin.

One of the objects of the present invention are is provide a method for press molding the fiber-reinforced thermoplastic resin without lowering the quality and the work efficiency with the high productivity.

### Solution to Problem

By the earnest research, the present inventors found the method for obtaining the fiber-reinforced resin molded article having high completion by press molding the fiber-reinforced resin. That is, the present invention includes:
[1] A method for producing a fiber-reinforced thermoplastic resin molded article having a thickness from 0.2 to 5.0 mm by pressing a single prepreg of a fiber-reinforced resin, stacked prepregs or stacked prepregs with one or more adhesive resin sheet interposed between the prepregs, the method comprising steps of:
   heating an upper die and a lower die to temperatures ranging from 170 to 270 °C,
   positioning the prepreg or the stacked prepregs between the heated upper die and the heated lower die,
   lowering the upper die and applying a load to the prepreg or the stacked prepregs with the upper die and the lower die at the temperatures ranging from 170 to 270 °C to transform the prepreg or the stacked prepregs,
   maintaining the temperatures of the upper die and the lower die in a range of 170 to 270 °C,
   reducing the temperatures of the upper die and the lower die at a rate of 5 to 50 °C per minute,
   after the upper die and the lower die are cooled sufficiently, raising the upper die to extract the fiber-reinforced resin molded article.
[2] The method for producing a fiber-reinforced thermoplastic resin molded article according to [1], wherein the fiber-reinforced thermoplastic resin is a fiber-reinforced resin composed of polypropylene, polyethylene, polyvinyl chloride, polystyrene, polyvinyl acetate, polyurethane, Teflon (registered trademark), acryl, polyamide, polyacetal, polycarbonate, polyether, polyester, or the combination thereof.
[3] The method for producing a fiber-reinforced thermoplastic resin molded article according to [1] or [2], wherein temperatures of the upper die and the lower die are maintained at a temperature of 170 to 270 °C for 0.3 to 2 minutes per 1 mm of a thickness of the prepreg or the stacked prepregs when the upper die is positioned at a bottom dead point.

### Effects of the Invention

In the present invention, the press molding of the fiber-reinforced thermoplastic resin can be performed by properly controlling the temperature and the pressure, as a result, the fiber-reinforced thermoplastic resin molded article having high accuracy shape can be produced.

### Brief Description of Drawing

[Fig.1] Figure 1 is the explaining cross-sectional drawing of the press molding of the fiber-reinforced resin of the present invention.
[Fig.2] Figure 2 is the explaining cross-sectional drawing of the press molding of the fiber-reinforced resin of the present invention.
[Fig.3] Figure 3 is the explaining cross-sectional drawing of the press molding of the fiber-reinforced resin of the present invention.
[Fig.4] Figure 4 is a graph showing the changes of the temperature of the dies and the load during pressing in the Example.

### Form to Carry Out Invention

The present invention is described below by referencing to the figures of the Example. Note that the invention is not limited to the Example described below. The suitable modifications are possible within the technical range known to a person skilled in the art.

In this specification, the fiber-reinforced resin molded article is a molded article obtained by heating and cooling a prepreg for curing. The prepreg is obtained by impregnating a bundle of the fibers such as carbon fibers and glass fibers with a thermoplastic resin or a thermosetting resin and drying. The fiber-reinforced thermoplastic resin molded article refers to the fiber-reinforced resin molded article using the resin composed of the thermoplastic resin.

Also, in the present invention, the fiber-reinforced thermoplastic resin molded article includes at least one of thermoplastic resins or a resin composition including at least one of the thermoplastic resins.

Examples of the thermoplastic resins include polypropylene, polyethylene, polyvinyl chloride, polystyrene, polyvinyl acetate, polyurethane, Teflon (registered trademark), acryl, polyamide, polyacetal, polycarbonate, polyethers such as polyetheretherketone, polyetherketone and polyethersulfone, polyester, or the combination thereof. These may be used alone or in combination of two or more.

### Example

### [Press Molding of Thermoplastic Fiber-Reinforced Resin]

The press molding of the fiber-reinforced thermoplastic resin of the present invention includes press-molding the fiber-reinforced thermoplastic resin prepreg 3 to produce the fiber-reinforced resin molded article.

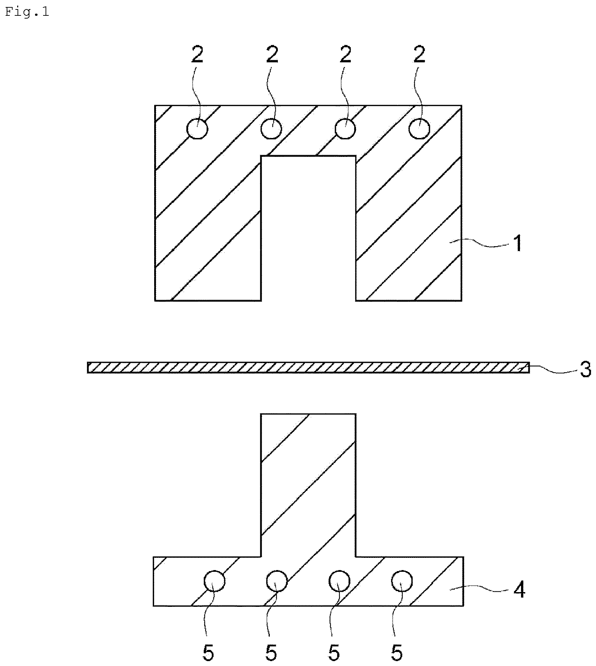

The device for producing the fiber-reinforced thermoplastic resin molded article of the present invention by pressing includes concave upper die 1 positioned above and convex lower die 4 acting as the opposite side of the upper die 1 as shown in Fig. 1.

The concave shape of the upper die 1 is a female die for molding the prepreg 3 and the convex shape of the lower die 4 is a male die to the upper die 1. The upper die 1 is equipped with heater 2 to heat the upper die 1 and the lower die 4 is equipped with the heater 5 to heat the lower die 4.

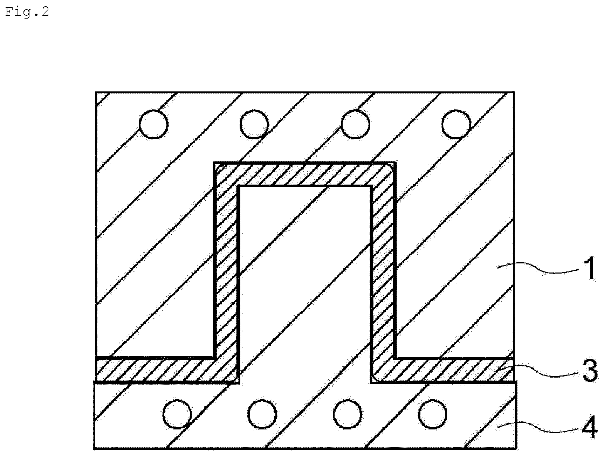

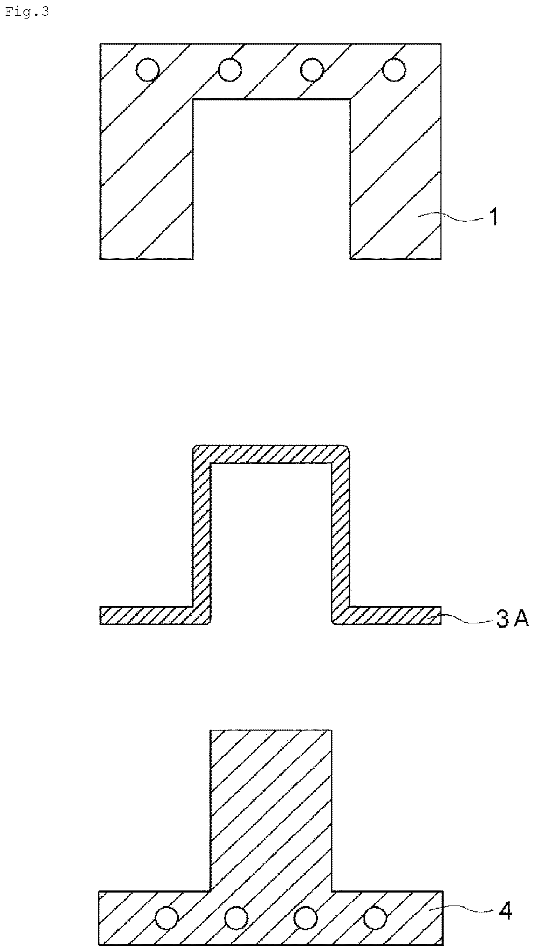

The press molding method of the present invention includes the step in which the temperatures of the upper die 1 and the lower die 4 are set in a range from 170 to 270 °C by heating the upper die 1 and the lower die 4, the step in which the prepreg 3 is positioned between the upper die 1 and the lower die 4 (Step a Fig.1), the step in which the upper die 1 is lowered and the prepreg 3 is deformed by applying the load to the prepreg 3 with the upper die 1 and the lower die 4 while the temperatures of the upper die 1 and the lower die 4 are within the temperature range from 170 to 270 °C (Step b Fig.2), the step in which the temperatures of the upper die 1 and the lower die 4 are lowered at a speed from 10 to 50 °C per 1 minute (Step d Fig.2), and the step in which after the upper die 1 and the lower die 4 are sufficiently cooled, the upper die 1 is raised and the fiber-reinforced thermoplastic resin molded body 3A is extracted (Step e Fig.3). If necessary, the press molding method of the present invention includes the step in which the temperatures of the upper die 1 and the lower die 4 are maintained within the temperature range from 170 to 270 °C for 0.3 to 2 minutes per 1 mm of the thickness of the prepreg 3 when the upper die 1 is positioned at the bottom dead center (bottom dead point) (Step c Fig.2). Here, the press molding method comprising the above step in which the temperatures are maintained is explained.

Note that in this Example, the fiber-reinforced thermoplastic resin prepreg including the carbon fiber and the polypropylene is used as prepreg 3, but the fiber-reinforced resin prepreg is not particularly limited to the prepreg used in this Example.

In this Example, the prepreg manufactured by Mitsubishi Chemical Corporation (twill weave, 0.23 mm in thickness of one sheet) was used as prepregs, and a plurality of prepreg sheets are stacked to obtain the completed fiber-reinforced thermoplastic resin molded article having a thickness of 1.6 mm. Note that the technique disclosed in the specification can be used for producing the fiber-reinforced thermoplastic resin molded article having a thickness from 0.2 to 5.0 mm and the thickness of the completed article can be adjusted by changing the number of the prepregs for stacking. Furthermore, the laminate strength between the prepregs can be also improved (the stacked prepreg can be made hard to peel off with each other) by interposing an adhesive and/or an adhesive resin sheet between the prepregs, when the prepregs are stacked. For example, the acrylic adhesive or the acrylic adhesive resin sheet can be used as an adhesive resin sheet. The adhesive resin sheet may be interposed between all the stacked prepregs or only between the prepregs requiring adhesive strength.

One of the characteristics of the present invention is to set the proper temperature and the proper pressure in the press step. At first, before the prepreg 3 was positioned, the upper die 1 and the lower die 4 were heated, respectively. The temperature increasing rate of each die by heating is preferably 5 to 40 °C/min, more preferably 10 to 30 °C/min but is not limited.

When the temperatures of the upper die 1 and the lower die 4 reaches to the set temperature, the upper die 1 and the lower die 4 are maintained at the temperature. The temperature for molding is 230 °C in this Example. The maintaining temperature is near the temperature for molding. At the temperature, the resin of the prepreg 3 positioned later is soften between the upper die 1 and the lower die 4 and the prepreg 3 can be shaped. The molding temperature and the maintaining temperature are, for example, within the range from the melting point of the thermoplastic resin of the prepreg 3 to the temperature higher than the melting point by 100 °C, and in one example from the melting point of the thermoplastic resin to the temperature higher than the melting point by 70 °C. When the molding temperature or the maintaining temperature is too high, the burning and the glossiness failure of the fiber-reinforced thermoplastic resin molded article are caused. When the maintaining temperature is too low, the fluidity of the resin is lowered and therefore the deformation and the whitening are caused.

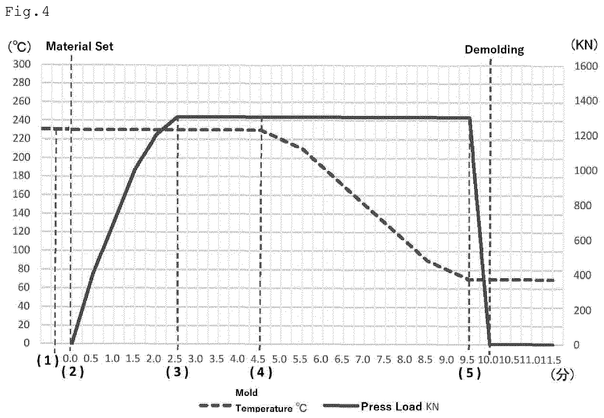

Next, the prepreg 3 was positioned on the lower die 4 (Step a). This step is at the position (1) in Fig.4. At the time of (1) in Fig.4, the upper die does not come into contact with the prepreg, and the pressure was not substantially applied.

After the prepreg 3 is positioned, the upper die 1 is lowered while the upper die and the lower die are maintained at the temperature. Soon the upper die 1 is contacted with the prepreg 3 (In Fig.4, this step is at the position (2).) and the upper die 1 is further lowered to the bottom dead center (Step c). The upper die 1 reaches the bottom dead center and the load becomes maximum (In Fig.4, this step is at the position (3)).

After the upper die 1 reaches the bottom dead center, the load and the temperature are maintained for a prescribed time. The maintaining time with the upper die at the bottom dead center is mainly adjusted according to the thickness of the prepreg 3. Generally, the maintaining time is from 0.3 to 2 minutes per 1 mm of the thickness of the prepreg 3. In Example, to produce the fiber-reinforced thermoplastic resin molded body 3A having a thickness of 1.6 mm, the maintaining time is about 2 minutes. When the maintaining time is short, the heat is not transmitted to the whole of the material and therefore it is different to obtain the desired shape. Especially the molding state of the corner of the article is insufficient. When the maintaining time is too long, the fluidity and the color tone of the resin change.

When the upper die 1 is at the bottom dead center, the load is not particularly limited and preferably 800 to 1500 KN, more preferably 900 to 1400 KN.

After the temperature and the load are maintained in the conditions that the upper die is at the bottom dead center, the temperatures of the dies (the upper die 1 and the lower die 4) are lowered at the prescribed speed (in Fig.4, this step is at the position (4)). Specifically, the lowering speed is generally equal to or less than 50 °C/min, preferably equal to or less than 40 °C/min. The lowering speed is generally equal to or more than 5 °C/min, preferably equal to or more than 10 °C/min. When the fiber-reinforced thermoplastic resin molded article is formed by press-molding, the lowering speed of the temperature is very important because the lowering speed affects the surface finishing and the internal strength of the finished article. When the lowering speed of the temperature is high, there is a risk that the void, the sink mark, and flow mark are generated. When the lowering speed of the temperature is too low, the burning and the glossiness failure are caused. At a proper lowering speed of the temperature, the problems do not occur, and the generation of the residual stress can be suppressed.

When the temperature is lowered to the temperature at which the thermoplastic resin is cured at the speed aforementioned, the pressing by the upper die 1 is stopped (In Fig.4, this step is at the position (5).), and the upper die 1 is raised to the original position (Step e). The fiber-reinforced thermoplastic resin molded body 3A is released from the mold and the press molding is completed.

When the pressing is performed continuously, the temperatures of the dies need not to be returned to the room temperature and may be set to be, for example, from 60 to 90 °C. When the temperature is high in some degrees, the time for heating again can be shorter and the required energy can be reduced.

By using the press processing described above, the press processing of the fiber-reinforced thermoplastic resin which is difficult to press compared to the metal can be achieved.

### Description of Code

- 1: Upper die
- 2: Heater for upper die
- 3: Prepreg
- 3A: Fiber-reinforced thermoplastic resin molded body
- 4: Lower die
- 5: Heater for lower die

## Claims

1. A method for producing a fiber-reinforced thermoplastic resin molded article having a thickness from 0.2 to 5.0 mm by pressing a single prepreg of a fiber-reinforced resin, stacked prepregs or stacked prepregs with one or more adhesive resin sheet interposed between the prepregs, the method comprising steps of:
heating an upper die and a lower die to temperatures ranging from 170 to 270 °C,
positioning the prepreg or the stacked prepregs between the heated upper die and the heated lower die,
lowering the upper die and applying a load to the prepreg with the upper die and the lower die at the temperatures ranging from 170 to 270 °C to transform the prepreg or the stacked prepregs while increasing the load, wherein the load is a maximum at a bottom dead center,
maintaining the temperatures of the upper die and the lower die in a range of 170 to 270 °C for 0.3 to 2 minutes per mm of a thickness of the prepreg when the upper die is positioned at the bottom dead center,
reducing the temperatures of the upper die and the lower die at a rate of 5 to 50 °C per minute,
after the upper die and the lower die are cooled sufficiently, raising the upper die to extract the fiber-reinforced resin molded article.
wherein the fiber of the fiber-reinforced thermoplastic resin is in a state of carbon fiber bundle.

2. The method for producing a fiber-reinforced thermoplastic resin molded article according to claim 1, wherein the fiber-reinforced thermoplastic resin is a fiber-reinforced resin composed of polypropylene, polyethylene, polyvinyl chloride, polystyrene, polyvinyl acetate, polyurethane, Teflon (registered trademark), acryl, polyamide, polyacetal, polycarbonate, polyether, polyester, or the combination thereof.
